# EUROPÄISCHE PATENTANMELDUNG

(11) **EP 2 374 363 A1**
(43) Veröffentlichungstag der Anmeldung: **12.10.2011**
(21) Anmeldenummer: 11001627.6
(22) Anmeldetag: 28.02.2011
(51) Int. Cl.: A23L 1/314, A23L 1/317, A23L 1/305, A23J 1/12, A23L 1/27

(54) **Fleischzusammensetzung, enthaltend texturiertes pflanzliches Protein, Verfahren zu deren Herstellung, sowie Fleischersatzprodukt**

(30) Priorität: 29.03.2010 DE 102010013205
(71) Anmelder: VION N.V., 5681 RH Best (NL)
(72) Erfinder:
(74) Vertreter: Roos, Peter

(57) **Zusammenfassung**

Die vorliegende Erfindung betrifft Fleischzusammensetzungen, welche auf einer Kombination aus Fleisch und pflanzlichem Protein basieren und besonders gut als Ersatz für herkömmliches Fleisch bzw. Fleischprodukte (z. B. Hackfleisch) geeignet sind. Die erfindungsgemäße Fleischzusammensetzung umfasst 1 Gew.-% bis 50 Gew.-% texturiertes Weizenprotein (Komponente (A)), 0,1 Gew.-% bis 10 Gew.-% einer speziellen Mischung (Komponente (B)) und 40 Gew.-% bis 98,9 Gew.-% Fleisch (Komponente (C)). Die spezielle Mischung besteht bevorzugt aus 15 Gew.-% bis 88 Gew.-% Fleischpulver, 10 Gew.-% bis 60 Gew.-% Rote Beete-Extrakt und/oder Paprikapulver, 1 Gew.-% bis 10 Gew.-% Karamell, und 1 Gew.-% bis 15 Gew.-% Rosmarin-Extrakt. Darüber hinaus können optional übliche Zusatzstoffe und/oder Hilfsstoffe zusätzlich enthalten sein. Darüber hinaus betrifft die vorliegende Erfindung Verfahren zur Herstellung der erfindungsgemäßen Fleischzusammensetzungen.

## Beschreibung

Die vorliegende Erfindung betrifft Zusammensetzungen, die als Ersatz für herkömmliches Fleisch bzw. Fleischprodukte geeignet sind und Verfahren zu deren Herstellung. Insbesondere betrifft die vorliegende Erfindung Fleischzusammensetzungen, welche auf einer Kombination aus Fleisch und pflanzlichem Protein basieren und Verfahren zu deren Herstellung.

### 1. Stand der Technik

Gesunde Ernährung ist und bleibt ein wesentlicher Trend in der modernen Gesellschaft. Dabei geht der Trend hin zu einer mehr auf pflanzlichen Produkten basierenden Ernährung. Ein wichtiger Aspekt für viele Verbraucher, die nicht vollständig auf den Verzehr von Fleisch oder anderer tierischer Produkte verzichten möchten, ist hierbei eine Verringerung des Fleischkonsums, um so die Aufnahme von tierischen Fetten und Cholesterin zu verringern, und um gleichzeitig auf wertvolle pflanzliche Eiweiße als Proteinquelle zuzugreifen.

Fleischersatzprodukte aus pflanzlichen Produkten, wie Soja, Getreidegluten etc., aber auch auf Basis von tierischen Proteinen, wie Molke (US 2004/0161519 A1), sind seit längerem bekannt. Um die Akzeptanz derartiger Produkte beim Verbraucher zu erhöhen ist es wichtig, bei derartigen Erzeugnissen die organoleptischen Eigenschaften von Fleisch, also Eigenschaften wie Geruch, Geschmack, Aussehen, Farbe und Konsistenz (Mundgefühl), zu imitieren. Entscheidend ist hierbei unter anderem die faserige Struktur von Fleisch nachzuahmen. Dies kann beispielsweise durch die Verwendung von extrudiertem, pflanzlichen Protein, wie Soja, geschehen.

Ein Verfahren zum Herstellen von strukturiertem bzw. texturiertem Protein, das als Fleischersatz verwendet werden kann, ist beispielsweise in der WO 2008/124620 A1 beschrieben. Dabei wird pflanzliches Proteinmaterial einem Extrusionsprozess unterzogen. Im so erhaltenen extrudierten Proteinmaterial sind die Proteinfilamente in einer einem natürlichen Fleisch vergleichbaren Art und Weise mehr oder weniger parallel zueinander ausgerichtet, womit eine Fleischkonsistenz imitiert wird.

Darüber hinaus ist aber auch die Farbe des erzeugten Fleischersatzprodukts von Bedeutung. Dies gilt umso mehr, wenn das Fleischersatzprodukt mit herkömmlichem Fleisch oder Fleischprodukten gemischt werden soll und somit der natürlichen Fleischfarbe entsprechen sollte. Hierbei stellt sich das Problem, dass Fleisch beim Braten oder Kochen seine Farbe ändert und das Fleischersatzprodukt auch diese Farbänderung aufweisen sollte. Neben den üblichen im Stand der Technik bekannten Färbemitteln ist aus der EP 1 180 332 B1 eine Zusammensetzung zum Färben von Nahrungsmitteln und Proteinmaterial bekannt, welche zur Nachahmung der vorstehend beschriebenen Farbänderung besonders geeignet ist. Die Zusammensetzung kann unter anderem Betanin, ein roter Farbstoff der Roten Beete, oder direkt Rote Beete-Extrakt, als thermisch instabile Farbstoffkomponente enthalten. Diese Komponente verleiht dem Fleischersatzprodukt die Farbe von rohem Fleisch. Nachdem diese Komponente beim Braten zerfällt verschwindet auch die rote Farbe und es kommt eine braune Färbung, die beispielsweise durch die Verwendung von Karamellfarbstoff erhalten wird, zum Vorschein. Darüber hinaus kann die Zusammensetzung noch einen reduzierenden Zucker als Bräunungsmittel enthalten, der bei Hitzeeinwirkung mit Aminosäuren im Rahmen einer sogenannten Maillard-Reaktion umgesetzt wird.

Fleischzusammensetzungen, die auf einer Kombination aus natürlichem Fleisch oder Fleischprodukten, wie Hackfleisch, etc., und einem strukturiertem bzw. texturiertem pflanzlichen Protein bestehen, sind bekannt. So beschreibt beispielsweise die WO 2007/137125 A2 eine Fleischzusammensetzung aus einer Kombination aus extrudiertem und gefärbtem pflanzlichen Protein und natürlichem Fleisch. Als pflanzliche Proteinquelle können neben Soja, auch eine Reihe von Getreidearten, wie Mais, Weizen, Gerste, Hafer, Roggen, Hirse, verwendet werden. Bei dem in der Zusammensetzung eingesetzten Fleisch kann es sich unter anderem um Schweinefleisch oder Rindfleisch handeln. Zur Herstellung der Fleischzusammensetzung wird das extrudierte Proteinmaterial hydratisiert, gefärbt und mit Fleisch gemischt und schlussendlich zu den gewünschten Nahrungsmitteln weiterverarbeitet.

Es ist ferner bekannt, den Proteinmaterialien und/oder den diese enthaltenden Fleischzusammensetzungen weiter Zusatzstoffe, wie Aromastoffe, Gewürze, Antioxidantien, zuzusetzen.

Trotz der Vielzahl an bereits bekannten Fleischzusammensetzungen bleibt es ein wichtiges Ziel spezielle, weiter verbesserte Fleischzusammensetzungen bereitzustellen, die hinsichtlich ihrer organoleptischen Eigenschaften weiter verbessert und darüber hinaus ernährungsphysiologisch wertvoll sind, um so die Akzeptanz beim Konsumenten weiter zu erhöhen. Insbesondere soll mit der Erfindung ermöglicht werden, eine verbesserte Fleischzusammensetzung bereitzustellen, bei welcher auf den Einsatz von Aromastoffen ganz verzichtet werden kann und trotzdem z. B. ein natürlichem Fleisch entsprechender Eindruck (z. B. von der Konsistenz her, farblich, geschmacklich und geruchlich) beim Konsumenten entsteht.

### 2. Beschreibung der Erfindung

Es wurde gefunden, dass eine Fleischzusammensetzung nach Anspruch 1 bzw. ein Herstellungsverfahren nach Anspruch 8 bzw. ein Fleischersatzprodukt nach Anspruch 15 zur Lösung dieser Aufgabe besonders geeignet sind. Die abhängigen Ansprüche betreffen vorteilhafte Weiterbildungen der Erfindung.

Die erfindungsgemäße Fleischzusammensetzung umfasst die folgenden Komponenten:
(A) texturiertes pflanzliches Protein, insbesondere Weizenprotein,
(B) Mischung bestehend aus
   (b1) Fleischpulver, z. B. Rindfleisch- und/oder Schweinefleischpulver,
   (b2) Rote Beete-Extrakt
   (b3) Karamell und/oder Paprika-Extrakt
   (b4) Rosmarin-Extrakt,
(C) Fleisch, insbesondere Hackfleisch,
(D) Wasser,
(E) optional, übliche Zusatzstoffe oder Hilfsstoffe sowie Gemische davon, bevorzugt jedoch keine künstlichen oder natürlichen Aromastoffe.

Es hat sich herausgestellt, dass mit der erfindungsgemäßen Fleischzusammensetzung hervorragende Eigenschaften erzielt werden können, so dass insbesondere Konsumenten angesprochen werden, die bei einem Kombinationsprodukt aus natürlichem Fleisch (wie z. B. Hackfleisch) mit pflanzlichem Protein nicht auf den von natürlichem Fleisch gewohnten Gesamteindruck verzichten möchten. Besonders vorteilhaft kann ein derartiger Eindruck mit der Erfindung auch ohne künstliche Aromastoffe und/oder natürliche Aromastoffe erzielt werden.

Hinsichtlich des in Anspruch 1 angegebenen Anteils der Komponente (D), also Wasser, ist zu beachten, dass in diesen Anteil nicht die Wasseranteile der in den eingesetzten Komponenten (A), (B) und (C) und gegebenenfalls (E) bereits enthaltenen Wasseranteile eingerechnet sind. Ein beispielsweise durch einen Extrusionsprozess in an sich bekannter Weise hergestelltes texturiertes Weizenprotein besitzt typischerweise einen gewissen Wasseranteil (z. B. 1 Gew.-% bis 10 Gew.-%). Ein derartiger Wasseranteil im eingesetzten Weizenprotein trägt also gewichtsmäßig zur Komponente (A) und nicht zur Komponente (D) bei. Entsprechendes gilt auch für etwaige Wasseranteile in den Komponenten (b1) bis (b4), die zusammen die Komponente (B) ergeben. Und insbesondere gilt dies auch für die typischerweise erheblichen Wasseranteile in der Komponente (C), also dem Fleisch. Fleisch enthält typischerweise etwa 50 bis 70 Gew.-% Wasser.

Unter einem texturierten Weizenprotein im Sinn der vorliegenden Erfindung ist ein Weizenprotein zu verstehen, welches eine fleischähnliche Textur bzw. Konsistenz aufweist. Das heißt, die Proteinfasern des Weizenproteins sind zueinander in einer natürlichem Fleisch vergleichbaren Art und Weise ausgerichtet. Derartige texturierte Weizenproteine und Verfahren zu deren Herstellung, beispielsweise mittels Extrusion, sind bekannt.

Bei den texturierten Weizenproteinen handelt es vorzugweise um texturiertes Weizengluten, insbesondere hergestellt mittels Extrusion und insbesondere mit einem Feuchtegehalt von maximal 10 %. Gluten ist ein Proteingemisch, das in Getreidekörnern und damit in daraus hergestellten Mehlen enthalten ist. Vorteilhaft kann im Rahmen der vorliegenden Erfindung z. B. auf im Handel erhältliche texturierte Weizenproteine, insbesondere texturiertes Weizengluten zurückgegriffen werden.

Die erfindungsgemäße Fleischzusammensetzung kann über das texturierte Weizenprotein hinaus noch weitere pflanzliche Proteine, tierische Proteine, Proteine mikrobiellen Ursprungs und Gemische davon als Komponente (A) enthalten. Nicht abschließende Beispiele sind Proteine anderer Getreidearten, wie Gerste, Roggen, Hafer, Mais, aber auch Proteine aus Hülsenfrüchtlern (Fabaceae), wie beispielsweise Soja oder Lupinen. Als tierische Proteine können beispielsweise Milchproteine, Casein und Molke, aus Eiern erhältliche Proteine, Fleischproteine etc. eingesetzt werden. Der Anteil an diesen zusätzlich eingesetzten Proteinen liegt vorzugsweise maximal bei 1 Gew.-% bis 50 Gew.-% bezogen auf Komponente (A).

Gemäß einer erfindungsgemäßen Ausführungsform enthält die Fleischzusammensetzung jedoch kein Sojaprotein und/oder Molkeprotein. Die Formulierung "enthält kein Sojaprotein und/oder Molkeprotein" ist im Sinn der vorliegenden Erfindung dahingehend zu verstehen, dass der Fleischzusammensetzung kein Sojaprotein und/oder Molkeprotein, weder als Bestandteil der Komponente (A) oder als optionale Komponente (E) zugesetzt wird. Mögliche Reste bzw. Verunreinigungen der Fleischzusammensetzung durch Sojaproteine und/oder Molkeproteine, die beispielsweise in der pflanzlichen Proteinquelle enthalten sein können, sollen hierdurch nicht ausgeschlossen werden.

In einer besonders bevorzugten Ausführungsform beinhaltet die Fleischzusammensetzung als Proteinkomponente, also als Komponente (A), nur Weizengluten. Weitere texturierte Pflanzenproteine werden nicht eingesetzt. Pflanzliche Proteine, die durch die weiteren wesentlichen und/oder essentiellen Bestandteile der Fleischzusammensetzung, wie dem Rosmarinextrakt, dem Rote Beete-Extrakt, dem Paprika-Extrakt, der optionalen Komponente (E), etc., zugeführt werden, sind hierdurch jedoch nicht ausgeschlossen.

Der Anteil an Komponente (A) in den erfindungsgemäßen Fleischzusammensetzungen beträgt zwischen 1 Gew.-% bis 50 Gew.-%, bezogen auf die Summe der Komponenten (A) bis (D). Vorzugsweise beträgt der Anteil an Komponente (A) zwischen 2 Gew.-%, 4 Gew.-%, 6 Gew.-%, oder 8 Gew.-% bis zu 10 Gew.-%, 12 Gew.-%, 15 Gew.-%, 20 Gew.-% oder 40 Gew.-%.

Die vorstehend angegebenen Werte bzw. Wertebereiche beziehen sich auf texturierte Proteine mit einem "natürlichen" Feuchtegehalt von 0 bis 10 %. Wie es weiter unten noch erläutert wird, sollte das für die Herstellung der erfindungsgemäßen Fleischzusammensetzung herangezogene Weizenprotein in Wasser und/oder in einer wässrigen Lösung (der Komponente (B)) vorgequollen werden, bevor die Weiterverarbeitung zum Endprodukt erfolgt (insbesondere z. B. eine Vermischung mit der Komponente (C), also dem Fleisch). Bei einem solchen Vorquellen können beträchtliche Mengen an Wasser aus dem dazu verwendeten Wasser bzw. der dazu verwendeten wässrigen Lösung in das texturierte Weizenprotein gelangen. Der damit über den vorstehend genannten "natürlichen" Feuchtegehalt des Weizenproteins hinausgehende Wasseranteil ist im Sinne der Erfindung als ein der Komponente (D) zuzurechnender Anteil zu verstehen.

Die Komponente (A) kann in jeder möglichen Körnung bzw. Größe bzw. Form eingesetzt werden. Das textuierte Weizenprotein und die gegebenenfalls darüber hinaus eingesetzten Proteine können z. B. als Pulver, Granulat, in Flockenform, als "Chips" oder Gemischen daraus eingesetzt werden. Ganz oder teilweise kann das eingesetzte texturierte Weizenprotein auch z. B. in pastöser Konsistenz vorliegen. Vorzugsweise werden die Komponente (A) und die Komponente (C) mit einer vergleichbaren Körnung bzw. Größe bzw. Form eingesetzt, um die so erhaltene Fleischzusammensetzung homogen wirken zu lassen.

Durch den Ersatz eines Teils des herkömmlichen Fleischs durch die Komponente (A) in den erfindungsgemäßen Fleischzusammensetzungen kann, durch den geringeren relativen Anteil an Fleisch in der Fleischzusammensetzung, der Fleischkonsum und damit die Zufuhr von tierischen Fetten und Cholesterin reduziert werden. Darüber hinaus werden dem Konsumenten wertvolle pflanzliche Proteine zur Verfügung gestellt.

Um jedoch die organoleptischen Eigenschaften einer derartigen Fleischzusammensetzung, und damit die Akzeptanz beim Konsumenten, weiter zu verbessern, muss das texturierte Protein (Komponente (A)) gefärbt werden, so dass es eine fleischähnliche Färbung erhält. Darüber hinaus muss der pflanzliche bzw. fleisch-untypische Proteingeruch überdeckt werden. Es wurde gefunden, dass die als Komponente (B) in der Fleischzusammensetzung enthaltene Mischung hierfür besonders geeignet ist.

Der Anteil an Komponente (B) in den erfindungsgemäßen Fleischzusammensetzungen beträgt zwischen 0,1 Gew.-% bis 10 Gew.-%, vorzugsweise zwischen 0,2 Gew.-%, 0,4 Gew.-% oder 0,6 Gew.-% bis zu 0,8 Gew.-%, 1 Gew.-%, 2 Gew.-% oder 4 Gew.-%.

Die erfindungsgemäß eingesetzte Komponente (B) ist ein Mischung bestehend aus mindestens 0,1 Gew.-%, bevorzugt mindestens 15 Gew.-%, weiter bevorzugt 30 Gew.-% bis höchstens 88 Gew.-% Fleischpulver, 0,1 Gew.-% bis 60 Gew.-% Rote Beete-Extrakt, 0,1 Gew.-% bis 10 Gew.-% Karamell und/oder Paprika-Extrakt (z. B. Paprikapulver) und 0,1 Gew.-% bis 15 Gew.-% Rosmarin-Extrakt.

Bei dem eingesetzten Fleischpulver kann es sich z. B. um sprühgetrocknetes Fleisch handeln. Gemäß einer bevorzugten Ausführungsform wird Fleischpulver eingesetzt, welches aus gehacktem, sodann gefriergetrocknetem und schließlich gemahlenem Fleisch erhalten wurde.

Das Fleischpulver kann aus einer oder mehreren Fleischsorten zusammengesetzt sein. Vorteilhaft kann die sortenmäßige Zusammensetzung des Fleischpulvers in Anpassung an die sortenmäßige Zusammensetzung des als Komponente (C) vorgesehenen Fleisches gewählt werden. Falls als Komponente (C) beispielsweise nur eine Sorte von Fleisch (z. B. Schweinefleisch) verwendet wird, so kann insbesondere ein Fleischpulver eingesetzt werden, welches ebenfalls größtenteils oder im Wesentlichen vollständig aus der selben Fleischsorte hergestellt wurde. Falls die Komponente (C) aus verschiedenen Fleischsorten zusammengesetzt ist, so kann in Anpassung daran vorgesehen sein, dass das Fleischpulver zumindest einen Sortenanteil enthält, welcher auch im verwendeten Fleisch enthalten ist. Insbesondere kann das Fleischpulver in diesem Fall auch Anteile sämtlicher in der Komponente (C) enthaltener Fleischsorten enthalten.

Falls die Komponente (C) Rindfleisch oder Schweinefleisch oder ein Gemisch davon ist, so kann besonders vorteilhaft als Komponente (b1) Rindfleisch und/oder Schweinefleischpulver vorzugweise mit einem Anteil von 20 Gew.-%, 25 Gew.-%, 30 Gew.-% oder 35 Gew.-% bis zu 75 Gew.-%, 80 Gew.-%, oder 85 Gew.-% eingesetzt werden. Für die Erfindung geeignete Fleischpulver sind im Handel erhältlich. Durch den Einsatz des/der Fleischpulver(s) in den beschriebenen Mengenanteilen wird der pflanzliche bzw. fleisch-untypische Proteingeruch der Komponente (A) überlagert. Außerdem wird der natürliche Geruch von herkömmlichem Fleisch in positiverer Art und Weise unterstützt. Somit wird der Geruch der erfindungsgemäßen Fleischzusammensetzungen verbessert und an den Geruch von natürlichem Fleisch bzw. Fleischprodukten angepasst.

Auch Karamell bzw. Paprika-Extrakt beeinflusst die Eigenschaften (insbesondere z. B. Farbe) der Fleischzusammensetzung positiv. Darüber hinaus fungiert das Karamell bzw. der Paprika-Extrakt in Kombination mit dem Rote Beete-Extrakt als Färbemittel, um der Komponente (A) eine fleischähnliche Farbe zu verleihen. Damit werden die erfindungsgemäßen Fleischzusammensetzungen, über den Geruch hinaus, auch optisch an ein herkömmliches Fleisch bzw. Fleischprodukt angepasst. Mit Karamell kann eine eher bräunliche Färbung erzielt werden, wohingegen mit Paprika-Extrakt eine eher rötliche Tönung bewirkt wird.

In einer bevorzugten Ausführungsform, die insbesondere bei Verwendung von Rindfleisch oder Schweinefleisch oder einem Gemisch davon als Komponente (C) interessant ist, besteht die Komponente (b3) zu mindestens 90 Gew.-% aus Paprika-Extrakt und dementsprechend zu höchstens 10 Gew.-% aus Karamell. Gemäß einer speziellen vorteilhaften Ausführungsform ist vorgesehen, dass als Komponente (C) Rindfleisch oder Schweinefleisch oder ein Gemisch davon in Form von Hackfleisch verwendet wird und die Komponente (b3) aus Paprika-Extrakt besteht.

Karamell und/oder Paprika-Extrakt (z. B. Paprikapulver) wird erfindungsgemäß mit einem Anteil von 0,1 Gew.-%, insbesondere 1 Gew.-%, bis 10 Gew.-% bezogen auf Komponente (B) eingesetzt. Vorzugsweise beträgt dieser Anteil von 0,1 Gew.-%, 0,5 Gew.-%, 1 Gew.-% oder 2 Gew.-% bis zu 7,5 Gew.-%, 8,0 Gew.-%, 8,5 Gew.-%, 9,0 Gew.-% oder 9,5 Gew.-%. Die vorstehend angegebenen Unter- und Obergrenzen für den Anteil der Komponente (b3) sind insbesondere auch für den Fall bevorzugt, in welchem als Komponente (C) Rindfleisch oder Schweinefleisch oder ein Gemisch davon verwendet wird und/oder in dem die Komponente (b3) ausschließlich aus Paprika-Extrakt, beispielsweise in Pulverform, besteht.

Bei dem gegebenenfalls eingesetzten Karamell kann es sich insbesondere um Saccharose oder einen anderen nicht-reduzierten Zucker handeln. Das Karamell verleiht der Komponente (A) und damit auch der Fleischzusammensetzung abhängig vom Karamellisierungsgrad eine mehr oder weniger starke Brauntönung.

Der Rote Beete-Extrakt wird erfindungsgemäß mit einem Anteil von 0,1 Gew.-% bis 60 Gew.-% bezogen auf Komponente (B) eingesetzt. Vorzugsweise beträgt der Anteil des Rote Beete-Extrakts von 1 Gew.-%, 5 Gew.-% oder 10 Gew.-% bis zu 30 Gew.-%, 35 Gew.-%, 40 Gew.-% oder 60 Gew.-%.

Bei dem Rote Beete-Extrakt handelt es sich um ein Pulver, ein Granulat, eine Flüssigkeit oder Mischungen davon. Verfahren zur Herstellung von Rote Beete-Extrakten sind bekannt. Außerdem sind für die Erfindung geeignete Rote Beete-Extrakte im Handel erhältlich. Der Rote Beete-Extrakt verleiht der Komponente (A) und damit auch der Fleischzusammensetzung eine rote Farbe.

Die relativen Anteile des eingesetzten Karamells bzw. Paprika-Extrakts und des Rote Beete-Extrakts können in Abhängigkeit des in der Fleischzusammensetzung eingesetzten Fleischs, aneinander angepasst werden.

Gemäß einer Ausführungsform der Erfindung wird in der erfindungsgemäßen Fleischzusammensetzung Schweine- und/oder Rindfleisch eingesetzt. Rindfleisch besitzt eine dunklere Farbe als Schweinefleisch.

Enthält die erfindungsgemäße Fleischzusammensetzung nur Schweinefleisch, liegt ein vorteilhafter Anteil an Rote Beete-Extrakt vorzugsweise bei 5 Gew.-% bis 25 Gew.-%, bezogen auf Komponente (B). Noch bevorzugter beträgt der Anteil an Rote Beete-Extrakt von 10 Gew.-%, 12 Gew.-%, 14 Gew.-% oder 15 Gew.-% bis zu 17 Gew.-%, 18 Gew.-% oder 20 Gew.-%. Der Anteil an Karamell und/oder Paprika-Extrakt beträgt vorzugsweise 1 Gew.-% bis 10 Gew.-%, bezogen auf Komponente (B). Noch bevorzugter beträgt dieser Anteil von 1,5 Gew.-%, 2 Gew.-%, oder 3 Gew.-% bis zu 6 Gew.-%, 7 Gew.-%, 8 Gew.-% oder 9 Gew.-%.

Enthält die erfindungsgemäße Fleischzusammensetzung nur Rindfleisch, liegt ein vorteilhafter Anteil an Rote Beete-Extrakt vorzugsweise bei 20 Gew.-% bis 60 Gew.-%, bezogen auf Komponente (B). Noch bevorzugter beträgt der Anteil an Rote Beete-Extrakt von 30 Gew.-%, 35 Gew.-%, 40 Gew.-% oder 44 Gew.-% bis zu 50 Gew.-%, 52 Gew.-%, 54 Gew.-%, 56 Gew.-% oder 58 Gew.-%. Der Anteil an Karamell und/oder Paprika-Extrakt beträgt vorzugsweise 1 Gew.-% bis 10 Gew.-%, bezogen auf Komponente (B). Noch bevorzugter beträgt dieser Anteil von 1,5 Gew.-% oder 2 Gew.-% bis zu 5 Gew.-%, 6 Gew.-%, 7 Gew.-% oder 8 Gew.-%.

Enthält die erfindungsgemäße Fleischzusammensetzung eine Mischung aus Schweinefleisch und Rindfleisch, liegt der Anteil an Rote Beete-Extrakt vorzugsweise bei 10 Gew.-% bis 35 Gew.-%, bezogen auf Komponente (B). Noch bevorzugter beträgt der Anteil an Rote Beete-Extrakt von 12 Gew.-%, 14 Gew.-%, 16 Gew.-% oder 18 Gew.-% bis zu 24 Gew.-%, 26 Gew.-%, 28 Gew.-%, 30 Gew.-%, 32 Gew.-% oder 34 Gew.-%. Der Anteil an Karamell und/oder Paprika-Extrakt beträgt vorzugsweise 1 Gew.-% bis 10 Gew.-%, bezogen auf Komponente (B). Noch bevorzugter beträgt dieser Anteil von 1,5 Gew.-%, 2 Gew.-%, 4 Gew.-% oder 5 Gew.-% bis zu 7 Gew.-%, 8 Gew.-% oder 9 Gew.-%.

Gemäß einer bevorzugten Ausführungsform wird den erfindungsgemäßen Fleischzusammensetzungen kein reduzierender Zucker, z. B. als weiteres Färbemittel, weder in Komponente (B) noch in der optionalen Komponente (E) zugesetzt. Die Formulierung "es wird kein reduzierender Zucker zugesetzt" ist im Sinn der vorliegenden Erfindung dahingehend zu verstehen, dass kein reduzierender Zucker als zusätzlicher Bestandteil eingesetzt wird. Reduzierende Zucker, die durch andere Bestandteile der Fleischzusammensetzung zwangsläufig zugeführt werden, sind nicht ausgeschlossen.

Die Komponente (B) enthält als weiteren wesentlichen Bestandteil Rosmarin-Extrakt. Dieser dient zur Stabilisierung der Farbe der gefärbten Komponente (A) bzw. der Fleischzusammensetzung. Rosmarin-Extrakt als Inhaltsstoff in der Lebensmitteltechnologie ist bekannt. Für die Erfindung geeignete Extrakte können im Handel erworben werden. Im Rosmarin-Extrakt enthaltene Carnosolsäure besitzt vorteilhaft antioxidative und desodorierende Effekte.

Erfindungsgemäß beträgt der Anteil an Rosmarin-Extrakt in der Komponente (B) von 0,1 Gew.-% bis 15 Gew.-%. Vorzugsweise beträgt der Anteil von 2 Gew.-%, 3 Gew.-%, 4 Gew.-%, 5 Gew.-% bis zu 8,5 Gew.-%, 9,0 Gew.-% oder 9,5 Gew.-%.

Der Anteil an Rosmarin-Extrakt kann je nach eingesetztem Fleisch (Komponente (C)) variieren. Enthält die erfindungsgemäße Fleischzusammensetzung nur Schweinefleisch, beträgt der Anteil an Rosmarin-Extrakt vorzugsweise 6 Gew.-% bis 10 Gew.-%, bezogen auf Komponente (B). Noch bevorzugter beträgt der Anteil von 6,5 Gew.-%, 7,0 Gew.-% oder 7,5 Gew.-% bis zu 8,5 Gew.-%, 9,0 Gew.-% oder 9,5 Gew.-%.

Enthält die erfindungsgemäße Fleischzusammensetzung nur Rindfleisch, beträgt der Anteil an Rosmarin-Extrakt vorzugsweise 4 Gew.-% bis 8 Gew.-%, bezogen auf Komponente (B). Noch bevorzugter beträgt der Anteil von 4,5 Gew.-%, 5,0 Gew.-% oder 5,5 Gew.-% bis zu 6,5 Gew.-%, 7,0 Gew.-% oder 7,5 Gew.-%.

Enthält die erfindungsgemäße Fleischzusammensetzung eine Mischung aus Schweinefleisch und Rindfleisch, beträgt der Anteil an Rosmarin-Extrakt vorzugsweise 5 Gew.-% bis 9 Gew.-%, bezogen auf Komponente (B). Noch bevorzugter beträgt der Anteil von 5,5 Gew.-%, 6,0 Gew.-% oder 6,5 Gew.-% bis zu 7,5 Gew.-%, 8,0 Gew.-% oder 8,5 Gew.-%.

Die Kombination der vorstehend aufgeführten Bestandteile mit den spezifizierten relativen Anteilen zueinander in der Komponente (B) hat sich als besonders geeignet zum fleischähnlichen Färben und Aromatisieren von texturiertem Protein, vorzugweise von pflanzlichem Protein, wie Weizengluten, herausgestellt. Anhand von entsprechenden Vergleichsversuchen wurden Fleischzusammensetzungen mit relativen Anteilen der Komponenten außerhalb der erfindungsgemäßen bzw. im Rahmen der Erfindung besonders bevorzugten Bereiche mit Fleischzusammensetzungen verglichen, bei denen die erfindungsgemäß spezifizierten bzw. bevorzugten relativen Anteile enthalten waren. Getestet wurden insbesondere die sich ergebende Konsistenz sowie farbliche, geschmackliche und geruchliche Eigenschaften der Fleischzusammensetzungen.

Im Rahmen der Herstellung der erfindungsgemäßen Fleischzusammensetzung kann die Komponente (B) z. B. in flüssiger oder pastöser Form, bevorzugt jedoch als Pulver bereitgestellt werden. Bei der Verarbeitung zur Fleischzusammensetzung ist jedoch bevorzugt, dass zunächst eine wässrige Lösung der Komponente (B) hergestellt wird, welches in diesem Fall mengenmäßig bei der Komponente (D) berücksichtigt wird. Gemäß einer Ausführungsform wird jedoch nicht die gesamte Menge an Komponente (D) zur Herstellung einer solchen wässrigen Lösung der Komponente (B) verwandt, sondern lediglich ein Teil davon. Das übrige, durch die Komponente (D) berücksichtigte Wasser kann insbesondere dazu verwendet werden, die zuvor durch Auflösen der Komponente (B) hergestellte wässrige Lösung noch weiter zu verdünnen, bevor die somit weiterverdünnte Lösung mit anderen Komponenten, insbesondere der Komponente (A) und/oder der Komponente (C) in Verbindung gebracht bzw. damit gemischt wird. Alternativ oder zusätzlich kann das übrige, im Anteil der Komponente (D) berücksichtige Wasser dazu verwendet werden, das texturierte Weizenprotein vorzuquellen.

Gemäß einer spezielleren Ausführungsform ist vorgesehen, dass das bereitgestellte texturierte Weizenprotein (beispielsweise mit einem Feuchtegehalt von 1 % bis 10 %) nicht in reinem Wasser sondern in der vorstehend erwähnten wässrigen Lösung der Komponente (B) vorgequollen wird. Ein solches Vorquellen, sei es mit Wasser oder mit der erwähnten wässrigen Lösung, kann beispielsweise kalt (z. B. bei 5 bis 10 °C) oder aber im erwärmten Zustand (z. B. bei mehr als 40 °C, insbesondere mehr als 60 °C) erfolgen. Auch ein Kochen des eingesetzten pflanzlichen Proteins im Wasser bzw. der wässrigen Lösung ist möglich.

Die erfindungsgemäßen Fleischzusammensetzungen können als Komponente (C) insbesondere Schweinefleisch oder Rindfleisch oder eine Kombination der beiden Fleischsorten beinhalten. Insbesondere in diesem Fall beträgt der Anteil an Komponente (C) in der Fleischzusammensetzung bezogen auf die Summe der Komponenten (A) bis (D), vorzugsweise zwischen 45 Gew.-%, 50 Gew.-%, 55 Gew.-%, 60 Gew.-% oder 70 Gew.-% bis zu 80 Gew.-%, 85 Gew.-%, 90 Gew.-% oder 95 Gew.-%.

Gemäß einer erfindungsgemäßen Ausführungsform wird nur Schweinefleisch verwendet. Gemäß einer anderen erfindungsgemäßen Ausführungsform wird nur Rindfleisch verwendet. Gemäß einer noch weiteren erfindungsgemäßen Ausführungsform enthält die Fleischzusammensetzung eine Mischung aus Schweine- und Rindfleisch. Der relative Anteil an Schweinefleisch in dieser Mischung bezogen auf Komponente (C) beträgt 90 bis 10 Gew.-%, vorzugsweise 80 bis 30 oder 20 Gew.-%, noch bevorzugter 70 bis 50 oder 40 Gew.-%. Eine besonders bevorzugte Ausführungsform enthält 60 Gew.-% Schweinefleisch und 40 Gew.-% Rindfleisch als Komponente (C).

Fleisch im Sinne der vorliegenden Erfindung umfasst Muskelfleisch, aber auch weitere, als Nahrungsmittel geeignete Bestandteile des tierischen Körpers, wie Leber, Niere, Herz etc. Insbesondere kann das erfindungsgemäß eingesetzte Fleisch einen gewissen Anteil an Fett enthalten. Das Fleisch kann z. B. einen Fettgehalt von 5 Gew.-% bis zu 30 Gew.-% aufweisen. Vorzugsweise wird Muskelfleisch verwendet. Gemäß einer bevorzugten Ausführungsform liegt der Fettgehalt der Fleischzusammensetzung (Endprodukt) unter 25 Gew.-%, insbesondere unter 20 Gew.-% und/oder ergibt sich eine Reduzierung des Fettgehalts der Fleischzusammensetzung von mindestens 25 % (im Vergleich zum Fettgehalt der bei der Herstellung eingesetzten Komponente (C). Gemäß einer Ausführungsform beträgt der Proteinanteil der Fleischzusammensetzung mindestens 15 Gew.-%.

Das Fleisch liegt in den erfindungsgemäßen Fleischzusammensetzungen in einer zerkleinerten Form vor. Es kann beispielsweise als Hackfleisch, Fleischpaste, Fleischbrät etc. und Mischungen davon eingesetzt werden. Vorzugsweise wird Hackfleisch eingesetzt.

Das erfindungsgemäß eingesetzte Hackfleisch kann besonders vorteilhaft z. B. durch im Stand der Technik bekannte Verfahren hergestellt werden. Es weist vorzugsweise eine durchschnittliche Körnung von 1 bis 15 mm, noch bevorzugter von 2 bis 10 mm und noch mehr bevorzugt von 3 bis 6 mm auf. Am meisten bevorzugt wird Hackfleisch mit einer durchschnittlichen Körnung von etwa 5 mm eingesetzt.

Nach der bevorzugt in üblicher Weise erfolgten Herstellung solchen Hackfleisches kann dieses mit einem Fleischersatzprodukt vermischt werden, um das Endprodukt herzustellen. In diesem Fall wird das Fleischersatzprodukt aus einer Verarbeitung der Komponenten (A), (B), (D) und ggf. (E) gewonnen. Auch dieses Fleischersatzprodukt kann z. B. wie für normales Hackfleisch üblich durch Lochscheiben gepresst werden, um ein Hackfleischersatzprodukt herzustellen und dieses z. B. durch Unterrühren mit dem Hackfleisch zu vermischen. In diesem Fall ist es von Vorteil, wenn das Hackfleisch und das Hackfleischersatzprodukt mit wenigstens annähernd identischer Körnung hergestellt werden, bevor diese vermischt werden. In einer bevorzugten Ausführungsvariante umfasst die Herstellung einer erfindungsgemäßen Hackfleischzusammensetzung die Verwendung einer Lochscheibe, durch welche eine Mischung aus dem Hackfleisch und dem Hackfleischersatzprodukt hindurch gepresst wird. Dies kann z. B. in einer Lochscheibeneinrichtung realisiert sein, die am Ende des Herstellungsprozesses zum Einsatz kommt. Am Eingang einer solchen für Hackfleisch und Ersatzprodukt gemeinsam verwendeten Lochscheibeneinrichtung können die zugeführten Mischungskomponenten eine gegenüber dem ausgangsseitig erhaltenen Endprodukt größere Körnung und/oder eine nennenswert voneinander verschieden Körnung besitzen.

Erfindungsgemäß ist ferner auch Wasser in der Fleischzusammensetzung enthalten (als die Komponente (D)), das beispielsweise zum Vorquellen der Komponente (A) und/oder zum Lösen bzw. Suspendieren der Komponente (B) eingesetzt wird.

Über die Komponenten (A) bis (D) hinaus kann die erfindungsgemäße Fleischzusammensetzung als optionalen Bestandteil mindestens einen üblichen Zusatz- oder Hilfsstoff, als Komponente (E) enthalten. Derartige Zusatz- oder Hilfsstoffe sind bekannt und können im Handel erworben werden. Dies sind beispielsweise Kräuter, Gewürze, Salze, Mineralstoffe, Vitamine, Spurenelemente, Konservierungsstoffe, Gemüse, wobei gemäß einer bevorzugten Ausführungsform die Verwendung weiterer pflanzlicher Proteine, wie Sojaprotein, und/oder tierischer Proteine, wie Molke, und/oder die Verwendung eines reduzierenden Zuckers auch als ein Bestandteil der Komponente (E) ausgeschlossen wird. Natürlicherweise in anderen Komponenten vorkommende Anteile dieser Verbindungen sind jedoch nicht ausgeschlossen. Vorteilhafterweise kann gemäß einer bevorzugten Ausführungsform auf den Einsatz von natürlichen Aromastoffen und/oder künstlichen Aromastoffen, als Bestandteil der Komponente (E), verzichtet werden, da die vorteilhafte Zusammensetzung der Komponente (B) bereits zur Aromatisierung und zum Überdecken des fleischuntypischen Proteingeruchs, wie dem pflanzlichen Proteingeruch, ausreichend ist.

Der Anteil der optionalen Komponente (E) beträgt vorzugsweise 0 bis 20 Gew.-%. Noch bevorzugter beträgt der Anteil 0 bis 10 Gew.-%.

Die erfindungsgemäßen Fleischzusammensetzungen können zu Formlingen, wie Frikadellen, Bratlingen, Cevapcici, Hamburgern, Fleischbällchen, Hackbraten und allen anderen auf Hackfleisch basierenden Formlingen oder z. B. so genanntem "Granulat" weiterarbeitet werden und als solche(s) in roher oder gegarter Form, frisch oder tiefgekühlt, im Handel vertrieben werden. Alternativ kann die Fleischzusammensetzung als solche in roher Form für den Vertrieb portioniert und abgepackt werden.

In einem weiteren Aspekt betrifft die vorliegende Erfindung die vorstehend spezifizierte Komponente (B) als solche und deren Verwendung als Färbe- und Aromatisiermittel von Fleischersatzprodukten, die auf den vorstehend spezifizierten pflanzlichen und/oder tierischen und/oder mikrobiellen Proteinen basieren.

In einem weiterem Aspekt betrifft die vorliegende Erfindung ein Verfahren zur Herstellung der erfindungsgemäßen Fleischersatzprodukte bzw. Fleischzusammensetzungen.

In Rahmen des Verfahrens wird ein texturiertes pflanzliches Protein, insbesondere Weizenprotein (Komponente (A)) bereitgestellt. Wie vorstehend bereits erläutert, kann die z. B. mittels Extrusion bereitgestellte Komponente (A) einen Feuchtegehalt von z. B. bis zu 10 % aufweisen.

Die Komponente (A) kann sodann in Wasser gequollen werden. Beim Quellen werden die Proteinfasern durch die Einlagerung von Wasser voneinander gelöst, wodurch die fleischähnliche Konsistenz bzw. Textur verstärkt bzw. erst erreicht wird. Je nach Restfeuchtegehalt der eingesetzten Komponente (A) kann das texturierte Protein eine bestimmte Zeit lang in Wasser inkubiert werden, bis der gewünschte Effekt erreicht wird. So kann die Komponente (A) z. B. für einen Zeitraum zwischen 0,25 bis 24 Stunden, vorzugsweise zwischen 0,25 oder 0,5 oder 2 Stunden bis 3 oder 12 oder 24 Stunden vorgequollen werden. Vorzugsweise erfolgt das Quellen mit kaltem Wasser, z. B. einer Temperatur im Bereich von 1 °C bis 10 °C, beispielsweise etwa 6 - 9 °C. Alternativ erfolgt das Quellen und/oder Inkubieren bei einer erhöhten Temperatur von z. B. mehr als 40 °C, insbesondere mehr als 60 °C. Auch kann hierbei ein Kochen für mindestens 0,25 Stunden vorgesehen sein.

Bei diesem Vorquellen kann das Verhältnis von Komponente (A) zu Wasser z. B. von 1:6 bis zu 6:1, vorzugsweise zwischen 1:4 bis 4:1 und noch bevorzugter zwischen 1:2 bis 2:1 betragen.

Prinzipiell denkbar ist, dass die (gegebenenfalls vorgequollene) Komponente (A) dann im Verhältnis von z. B. 0,1:1 bis 500:1 mit Komponente (B), wie vorstehend spezifiziert, vermischt und z. B. für eine ausreichend lange Zeit inkubiert wird, so dass das Proteinmaterial gefärbt und aromatisiert wird. Vorzugsweise erfolgt dieser Verfahrenschritt bei einer Temperatur von 0 °C bis +10 °C, weiter bevorzugt von 0 °C bis +4 °C.

Gemäß einer besonders bevorzugten Ausführungsform des efindungsgemäßen Herstellungsverfahrens wird jedoch eine wässrige Lösung der Komponente (B) bereitgestellt, etwa durch Einmischen der Komponente (B) in Wasser, und die so erhaltene wässrige Lösung (wobei diese "Lösung" im Sinne der Erfindung ggf. auch darin suspendierte Bestandteile der Komponente (B) enthalten kann) mit der Komponente (A) gemischt.

Die hergestellte wässrige Lösung der Komponente (B) kann, bevorzugt vor dem Zugeben der Komponente (A), z. B. für mindestens 5 min, gekocht werden.

Die Komponente (A), die in die wässrige Lösung, oder in die mit weiterem, z. B. kaltem Wasser (von z. B. 1-10 °C) weiter verdünnte wässrige Lösung einzumischen ist , kann hierfür insbesondere auch im noch nicht vorgequollenen Zustand eingesetzt werden. Dies besitzt z. B. den Vorteil, dass kein eigens nur zum Quellen der Komponente (A) vorgesehener Verfahrensschritt erforderlich ist, sondern dieses Quellen (und ggf. nachfolgendes Inkubieren) in einem Schritt mit dem Färben und Aromatisieren der Komponente (A) zusammengefasst ist.

Das hierbei als Komponente (A) eingesetzte pflanzliche Protein, insbesondere texturierte Protein, kann sodann eine bestimmte Zeit lang in der bereitgestellten wässrigen (und ggf. weiter verdünnten) Lösung inkubiert werden, bis der gewünschte Effekt erreicht wird. So kann die Komponente (A) z. B. für einen Zeitraum zwischen 0,25 bis 24 Stunden, vorzugsweise zwischen 0,25 oder 0,5 oder 2 Stunden bis 3 oder 12 oder 24 Stunden vorgequollen bzw. inkubiert werden. Vorzugsweise erfolgt das Quellen in einer kalten (ggf. verdünnten) wässrigen Lösung der Komponente (B), z. B. einer Temperatur im Bereich von 1 °C bis 10 °C, beispielsweise etwa 6 - 9 °C. Alternativ erfolgt das Quellen und/oder Inkubieren bei einer erhöhten Temperatur von z. B. mehr als 40 °C, insbesondere mehr als 60 °C. Auch kann innerhalb der vorstehend angegebenen Zeiträume ein Kochen für mindestens 0,25 Stunden vorgesehen sein.

Gemäß einer bevorzugten Ausführungsform des Verfahrens zur Herstellung eines erfindungsgemäßen Fleischersatzproduktes bzw. einer erfindungsgemäßen Fleischzusammensetzung wird die im Wesentlichen gesamte (z. B. mindestens 90 %) Menge an zusätzlich zuzugebenden Wasser (Komponente (D)) für das Herstellen (und ggf. Verdünnen) der erwähnten wässrigen Lösung verwendet.

Dann wird Komponente (C), bevorzugt in den vorstehend spezifizierten Mengenanteilen, untergemischt. Das Fleisch bzw. die Fleischmischung sollte vorzugsweise auf eine Temperatur zwischen -2 °C bis + 2°C vorgekühlt sein, um eine Kontamination des Fleischprodukts beispielsweise durch Mikroorganismen zu verhindern.

Die so erhaltenen Fleischzusammensetzungen weisen organoleptische Eigenschaften auf, die mit denen von herkömmlichem Fleisch bzw. Fleischprodukten vergleichbar sind.

Die so erhaltene Fleischzusammensetzung kann direkt oder nach einer Zwischenlagerung zu Formlingen, oder so genanntem "Granulat" weiterarbeitet werden und als solche(s), frisch oder tiefgekühlt, in roher oder gegarter Form im Handel vertrieben werden. Alternativ kann die Fleischzusammensetzung als solche in roher Form für den Vertrieb portioniert und abgepackt werden (z. B. als im Einzelhandel zu verkaufendes Äquivalent für bislang übliches "Hackfleisch").

Ein erfindungsgemäßes Fleischersatzprodukt, insbesondere zur Herstellung einer Fleischzusammensetzung durch Mischen des Fleischersatzproduktes mit Fleisch, insbesondere zur Herstellung einer Fleischzusammensetzung der oben beschriebenen Art und/oder gemäß eines Herstellungsverfahrens der oben beschriebenen Art, umfasst:
(A) 20 Gew.-% bis 40 Gew.-% texturiertes Weizenprotein,
(B) 2 Gew.-% bis 8 Gew.-% einer Mischung, bestehend aus:
   (b1) 30 Gew.-% bis 80 Gew.-% Fleischpulver,
   (b2) 10 Gew.-% bis 60 Gew.-% Rote Beete-Extrakt,
   (b3) 1 Gew.-% bis 10 Gew.-% Karamell und/oder Paprika-Extrakt, und
   (b4) 3 Gew.-% bis 12 Gew.-% Rosmarin-Extrakt,
   wobei die Bestandteile (b1) bis (b4) zusammen 100 Gew.-%, bezogen auf Komponente (B) ergeben,
(D) 50 Gew.-% bis 75 Gew.-% Wasser, und
(E) optional, übliche Zusatzstoffe oder Hilfsstoffe sowie Gemischen davon, wobei die Mengenanteile der Komponenten (A), (B) und (D) zusammen 100 Gew.-% ergeben und der Anteil an der optionalen Komponente (E) zusätzlich addiert wird.

Gemäß einer zur Herstellung eines Rindfleischersatzproduktes oder zur Herstellung einer Fleischzusammensetzung durch Mischen mit Rindfleisch vorgesehenen Ausführungsform umfasst das Fleischersatzprodukt:
(A) 25 Gew.-% bis 35 Gew.-% texturiertes Weizenprotein,
(B) 4 Gew.-% bis 8 Gew.-% einer Mischung, bestehend aus:
   (b1) 40 Gew.-% bis 46 Gew.-% Rindfleischpulver,
   (b2) 44 Gew.-% bis 50 Gew.-% Rote Beete-Extrakt,
   (b3) 0,5 Gew.-% bis 4 Gew.-% Paprika-Extrakt, und
   (b4) 4 Gew.-% bis 8 Gew.-% Rosmarin-Extrakt,
      wobei die Bestandteile (b1) bis (b4) zusammen 100 Gew.-%, bezogen auf Komponente (B) ergeben,
(D) 55 Gew.-% bis 70 Gew.-% Wasser, und
(E) optional, übliche Zusatzstoffe oder Hilfsstoffe sowie Gemischen davon,
   wobei die Mengenanteile der Komponenten (A), (B) und (D) zusammen 100 Gew.-% ergeben und der Anteil an der optionalen Komponente (E) zusätzlich addiert wird.

Gemäß einer zur Herstellung eines Rind- und Schweinefleisch-Ersatzproduktes oder zur Herstellung einer Fleischzusammensetzung durch Mischen mit Rind- und Schweinefleisch eines Verhältnisses von 40:60 bis 50:50 vorgesehenen Ausführungsform umfasst das Fleischersatzprodukt:
(A) 25 Gew.-% bis 35 Gew.-% texturiertes Weizenprotein,
(B) 2 Gew.-% bis 6 Gew.-% einer Mischung, bestehend aus:
   (b1) 60 Gew.-% bis 68 Gew.-% Rindfleischpulver und/oder Schweinefleischpulver,
   (b2) 19 Gew.-% bis 25 Gew.-% Rote Beete-Extrakt,
   (b3) 0,5 Gew.-% bis 4 Gew.-% Paprika-Extrakt, und
   (b4) 5 Gew.-% bis 9 Gew.-% Rosmarin-Extrakt,
   wobei die Bestandteile (b1) bis (b4) zusammen 100 Gew.-%, bezogen auf Komponente (B) ergeben,
(D) 55 Gew.-% bis 70 Gew.-% Wasser, und
(E) optional, übliche Zusatzstoffe oder Hilfsstoffe sowie Gemischen davon,
   wobei die Mengenanteile der Komponenten (A), (B) und (D) zusammen 100 Gew.-% ergeben und der Anteil an der optionalen Komponente (E) zusätzlich addiert wird.

Gemäß einer zur Herstellung eines Schweinefleischersatzproduktes oder zur Herstellung einer Fleischzusammensetzung durch Mischen mit Schweinefleisch vorgesehenen Ausführungsform umfasst das Fleischersatzprodukt:
(A) 25 Gew.-% bis 35 Gew.-% texturiertes Weizenprotein,
(B) 2 Gew.-% bis 6 Gew.-% einer Mischung, bestehend aus:
   (b1) 65 Gew.-% bis 77 Gew.-% Schweinefleischpulver,
   (b2) 13 Gew.-% bis 19 Gew.-% Rote Beete-Extrakt,
   (b3) 0,5 Gew.-% bis 4 Gew.-% Paprika-Extrakt, und
   (b4) 6 Gew.-% bis 10 Gew.-% Rosmarin-Extrakt,
   wobei die Bestandteile (b1) bis (b4) zusammen 100 Gew.-%, bezogen auf Komponente (B) ergeben,
(D) 55 Gew.-% bis 70 Gew.-% Wasser, und
(E) optional, übliche Zusatzstoffe oder Hilfsstoffe sowie Gemischen davon,
   wobei die Mengenanteile der Komponenten (A), (B) und (D) zusammen 100 Gew.-% ergeben und der Anteil an der optionalen Komponente (E) zusätzlich addiert wird.

Die vorliegende Erfindung soll durch die nachstehend aufgeführten Beispiele näher erläutert, aber nicht darauf beschränkt werden.

### Beispiele

### Beispielhafte Mischungen zum Färben und Aromatisieren (Komponente (B))

| | Beispiel 1 | Beispiel 2 | Beispiel 3 |
|---|---|---|---|
| | Rind | Rind und Schwein | Schwein |
| Rindfleischpulver Komponente (b1) | 43 Gew.-% | 64 Gew.-% | - |
| Schweinefleischpulver Komponente (b1) | - | - | 71 Gew.-% |
| Rote Beete-Pulver Komponente (b2) | 47 Gew.-% | 22 Gew.-% | 16 Gew.-% |
| Karamell Komponente (b3) | 4 Gew.-% | 7 Gew.-% | 5 Gew.-% |
| Rosmarin-Extrakt Komponente (b4) | 6 Gew.-% | 7 Gew.-% | 8 Gew.-% |

Zur Herstellung der Komponente (B) werden die einzelnen Bestandteile miteinander vermischt und in Wasser aufgelöst (ggf. auch mit teilweise lediglich suspendierten Bestandteilen). Diese wässrige Lösung, gegebenenfalls kurz gekocht, und gegebenenfalls nachträglich noch weiter mit Wasser verdünnt, kann zum Färben und Aromatisieren der Komponente (A) bzw. der Fleischzusammensetzung verwendet werden.

Die Mischung gemäß Beispiel 1 ist zur Herstellung von Fleischzusammensetzungen, die nur Rindfleisch, enthalten besonders geeignet. Die Mischung gemäß Beispiel 2 ist zur Herstellung von Fleischzusammensetzungen, die eine Mischung aus Rind- und Schweinefleisch enthalten, besonders geeignet. Die Mischung gemäß Beispiel 3 ist zur Herstellung von Fleischzusammensetzungen, die nur Schweinefleisch enthalten, besonders geeignet. Eine mögliche Modifikation der Beispiele 1 bis 3 besteht darin, dass das darin verwendete Karamell (Komponente (b3)) durch Paprika-Extrakt ersetzt wird:

### Beispielhafte weitere Mischungen zum Färben und Aromatisieren (Komponente (B))

| | Beispiel 4 | Beispiel 5 | Beispiele 6 |
|---|---|---|---|
| | Rind | Rind und Schwein | Schwein |
| Rindfleischpulver Komponente (b1) | 44 Gew.-% | 68 Gew.-% | - |
| Schweinefleischpulver Komponente (b1) | - | - | 73 Gew.-% |
| Rote Beete-Pulver Komponente (b2) | 48 Gew.-% | 23 Gew.-% | 17 Gew.-% |
| Paprika-Extrakt Komponente (b3) | 2 Gew.-% | 2 Gew.-% | 2 Gew.-% |
| Rosmarin-Extrakt Komponente (b4) | 6 Gew.-% | 7 Gew.-% | 8 Gew.-% |

Im Hinblick auf die Mengenverhältnisse bei der Mischung der Komponente (B) mit der Komponente (C) und der Komponente (D), um zu einer Fleischzusammensetzung zu gelangen, sind nachfolgend einige Beispiele angegeben:

### Beispielhafte Fleischzusammensetzungen

| | Beispiel 7 | Beispiel 8 | Beispiel 9 |
|---|---|---|---|
| | Rind | Rind und Schwein | Schwein |
| Rindfleisch Komponente (C) | 21 kg | 8,4 kg | - |
| Schweinefleisch Komponente (C) | - | 12,6 kg | 21 kg |
| Weizengluten Komponente (A) | 3 kg | 3 kg | 3 kg |
| Komponente (B) | 0,5 kg (gemäß Beispiel 1 oder Beispiel 4) | 0,25 kg (gemäß Beispiel 2 oder Beispiel 5) | 0,25 kg (gemäß Beispiel 3 oder Beispiel 6) |
| Wasser Komponente (D) | 6 kg | 6 kg | 6 kg |

Die gesamte Menge an Komponente (D) kann bei diesen Beispielen durch das Quellen des texturierten Weizenglutens in Wasser und/oder der (z. B. abgekochten) wässrigen Lösung der Komponente (B) in die erfindungsgemäße Fleischzusammensetzung eingebracht sein. Bei dem Quellvorgang bzw. den Quellvorgängen zum Einbringen von Wasser bzw. der Färbe- und Aromatisierungsmischung (Komponente (B)) wird die verwendete Wassermenge (in den obigen Beispielen 6 kg) vollständig verbraucht, d. h. es wird kein Wasser nach dem Quellen verworfen.

Das texturierte Weizengluten, beispielsweise mit einem Feuchtegehalt von ca. 10 % liegt in Körnerform (Körnung ca. 1 bis 10 mm) vor. Das Weizengluten wird für mindestens 0,25 Stunden (z. B. etwa 0,5 Stunden) gequollen, bevorzugt in einer wässrigen Lösung der Komponente (B). Die so erhaltene Mischung kann für weitere 1 bis 24 Stunden, beispielsweise gekühlt, insbesondere auf weniger als 5 °C, z. B. bei etwa 0 °C inkubiert werden, um eine ausreichende Färbung und Aromatisierung des pflanzlichen Proteins zu erreichen. Gemäß einer besonders bevorzugten Ausführungsform des erfindungsgemäßen Herstellungsverfahrens wird eine Mischung aus dem texturierten Weizenprotein, der Komponente (B) und Wasser auf eine Temperatur von weniger als 1 °C, z. B. +1 °C bis -1 °C gebracht, bevor diese Mischung mit der Komponente (C) in Verbindung gebracht wird. Falls also diese Mischung zuvor z. B. bei einer höheren Temperatur hergestellt wurde bzw. vorher auf eine erhöhte Temperatur gebracht wurde, so muss gemäß dieser Ausführungsform spätestens unmittelbar vor der Zugabe der Komponente (C) die erwähnte Kühlung erfolgen.

Als Komponente (C) wird Hackfleisch mit einer durchschnittlichen Körnung im Bereich von 1 bis 15 mm, z. B. von 5 mm verwendet. Dieses wird durch ein herkömmliches Verfahren hergestellt und auf unter 1 °C, beispielsweise auf -1 °C gekühlt.

Das so erhaltene Hackfleisch wird anschließend mit dem gequollenen, gefärbten und aromatisierten Weizengluten ("Fleischersatzprodukt") durch Unterrühren gemischt und zusammen mit diesem durch eine so genannte Engelshaarmaschine geführt, portioniert und schließlich verpackt.

Alle Arbeitsschritte erfolgen unter möglichst keimfreien Bedingungen, um eine Kontamination der Fleischzusammensetzung zu verhindern. Die so erhaltene Fleischzusammensetzung weist zu herkömmlichen Hackfleisch vergleichbare organoleptische Eigenschaften auf.

## Patentansprüche

1. Fleischzusammensetzung, umfassend:
(A) 1 Gew.-% bis 50 Gew.-% texturiertes Weizenprotein,
(B) 0,1 Gew.-% bis 10 Gew.-% einer Mischung, bestehend aus:
(b1) 0,1 Gew.-% bis 88 Gew.-% Fleischpulver,
(b2) 0,1 Gew.-% bis 60 Gew.-% Rote Beete-Extrakt,
(b3) 0,1 Gew.-% bis 10 Gew.-% Karamell und/oder Paprika-Extrakt, und
(b4) 0,1 Gew.-% bis 15 Gew.-% Rosmarin-Extrakt,
wobei die Bestandteile (b1) bis (b4) zusammen 100 Gew.-%, bezogen auf Komponente (B) ergeben,
(C) 40 Gew.-% bis 98,9 Gew.-% Fleisch,
(D) 5 Gew.-% bis 40 Gew.-% Wasser, und
(E) optional, übliche Zusatzstoffe oder Hilfsstoffe sowie Gemischen davon,
wobei die Mengenanteile der Komponenten (A) bis (D) zusammen 100 Gew.-% ergeben und der Anteil an der optionalen Komponente (E) zusätzlich addiert wird.

2. Fleischzusammensetzung nach Anspruch 1, wobei das texturierte Weizenprotein Weizengluten ist.

3. Fleischzusammensetzung nach einem der vorangehenden Ansprüche, wobei als Komponente (C) Hackfleisch mit einer durchschnittlichen Körnung von 1 bis 15 mm, bevorzugt 2 bis 10 mm eingesetzt wird.

4. Fleischzusammensetzung nach einem der vorangehenden Ansprüche, wobei die Komponente (C) eine oder mehrere der folgenden Fleischsorten enthält: Rind, Schwein, Lamm, Geflügel, Kalb.

5. Fleischzusammensetzung nach einem der Ansprüche 1 bis 4, umfassend
(A) 4 Gew.-% bis 20 Gew.-% texturiertes Weizenprotein,
(B) 1 Gew.-% bis 10 Gew.-% einer Mischung, bestehend aus:
(b1) 35 Gew.-% bis 60 Gew.-% Rindfleischpulver,
(b2) 35 Gew.-% bis 60 Gew.-% Rote Beete-Extrakt,
(b3) 2 Gew.-% bis 8 Gew.-% Karamell und/oder Paprika-Extrakt, und
(b4) 3 Gew.-% bis 12 Gew.-% Rosmarin-Extrakt,
wobei die Bestandteile (b1) bis (b4) zusammen 100 Gew.-%, bezogen auf Komponente (B) ergeben,
(C) 50 Gew.-% bis 90 Gew.-% Rindfleisch,
(D) 10 Gew.-% bis 30 Gew.-% Wasser, und
(E) optional, übliche Zusatzstoffe oder Hilfsstoffe sowie Gemischen davon, wobei die Mengenanteile der Komponenten (A) bis (D) zusammen 100 Gew.-% ergeben und der Anteil an der optionalen Komponente (E) zusätzlich addiert wird.

6. Fleischzusammensetzung nach einem der Ansprüche 1 bis 4, umfassend
(A) 4 Gew.-% bis 20 Gew.-% texturiertes Weizenprotein,
(B) 0,5 Gew.-% bis 8 Gew.-% einer Mischung, bestehend aus:
(b1) 50 Gew.-% bis 70 Gew.-% Rindfleischpulver und/oder Schweinefleischpulver,
(b2) 10 Gew.-% bis 30 Gew.-% Rote Beete-Extrakt,
(b3) 2 Gew.-% bis 14 Gew.-% Karamell und/oder Paprika-Extrakt, und
(b4) 4 Gew.-% bis 14 Gew.-% Rosmarin-Extrakt,
wobei die Bestandteile (b1) bis (b4) zusammen 100 Gew.-%, bezogen auf Komponente (B) ergeben,
(C) 50 Gew.-% bis 90 Gew.-% Rindfleisch und Schweinefleisch, bevorzugt in einem Verhältnis von 30:70 bis 50:50,
(D) 10 Gew.-% bis 30 Gew.-% Wasser, und
(E) optional, übliche Zusatzstoffe oder Hilfsstoffe sowie Gemischen davon, wobei die Mengenanteile der Komponenten (A) bis (D) zusammen 100 Gew.-% ergeben und der Anteil an der optionalen Komponente (E) zusätzlich addiert wird.

7. Fleischzusammensetzung nach einem der Ansprüche 1 bis 4, umfassend
(A) 4 Gew.-% bis 20 Gew.-% texturiertes Weizenprotein,
(B) 0,5 Gew.-% bis 8 Gew.-% einer Mischung, bestehend aus:
(b1) 50 Gew.-% bis 90 Gew.-% Schweinefleischpulver,
(b2) 5 Gew.-% bis 25 Gew.-% Rote Beete-Extrakt,
(b3) 2 Gew.-% bis 10 Gew.-% Karamell und/oder Paprika-Extrakt, und
(b4) 4 Gew.-% bis 16 Gew.-% Rosmarin-Extrakt,
wobei die Bestandteile (b1) bis (b4) zusammen 100 Gew.-%, bezogen auf Komponente (B) ergeben,
(C) 50 Gew.-% bis 90 Gew.-% Schweinefleisch,
(D) 10 Gew.-% bis 30 Gew.-% Wasser, und
(E) optional, übliche Zusatzstoffe oder Hilfsstoffe sowie Gemischen davon, wobei die Mengenanteile der Komponenten (A) bis (D) zusammen 100 Gew.-% ergeben und der Anteil an der optionalen Komponente (E) zusätzlich addiert wird.

8. Verfahren zum Herstellen einer Fleischzusammensetzung nach einem der Ansprüche 1 bis 7, umfassend folgende Schritte:
a) Bereitstellen eines texturierten Weizenproteins, bevorzugt mit einem Feuchtegehalt von 1 bis 10 %,
b) Bereitstellen einer wässrigen Lösung einer Färbe- und Aromatisiermischung umfassend:
0,1 Gew.-% bis 88 Gew.-% Fleischpulver,
0,1 Gew.-% bis 60 Gew.-% Rote Beete-Extrakt,
0,1 Gew.-% bis 10 Gew.-% Karamell und/oder Paprika-Extrakt, und
0,1 Gew.-% bis 15 Gew.-% Rosmarin-Extrakt,
c) Mischen des in Schritt a) bereitgestellten texturierten Weizenproteins mit der in Schritt b) bereitgestellten Lösung, und optional Inkubieren der so erhaltenen Mischung,
d) Bereitstellen von Fleisch, und
e) Mischen der in Schritt c) erhaltenen Mischung mit dem in Schritt d) bereitgestellten Fleisch.

9. Verfahren nach Anspruch 8, wobei in Schritt a) das Bereitstellen von texturiertem Weizenprotein ein Quellen von Weizenprotein, vorzugsweise Weizengluten, in Wasser für einen Zeitraum von mindestens 0,25 Stunden umfasst, insbesondere bei einer Temperatur von weniger als 10 °C.

10. Verfahren nach Anspruch 8 oder 9, wobei die in Schritt b) bereitgestellte wässrige Lösung zunächst noch mit weiterem Wasser verdünnt wird, bevor die so verdünnte Lösung in Schritt c) mit dem bereitgestellten Weizenprotein vermischt wird.

11. Verfahren nach einem der Ansprüche 8 bis 10, wobei die in Schritt b) bereitgestellte wässrige Lösung mindestens 50 Gew.-% Wasser enthält.

12. Verfahren nach einem der Ansprüche 8 bis 11, wobei in Schritt c) ein Inkubieren für 0,25 bis 24 Stunden, insbesondere bei einer Temperatur von 0 °C bis 4 °C, erfolgt.

13. Verfahren nach einem der Ansprüche 8 bis 12, wobei in Schritt d) das Fleisch als Hackfleisch mit einer durchschnittlichen Körnung von 1 bis 10 mm bereitgestellt wird.

14. Verfahren nach einem der Ansprüche 8 bis 13, ferner umfassend den Schritt:
f) Hindurchpressen der in Schritt e) enthaltenen Mischung durch eine Lochscheibeneinrichtung, bevorzugt eine Lochscheibeneinrichtung mit einem Lochdurchmesser im Bereich von 1 bis 15 mm, weiter bevorzugt im Bereich von 3 bis 6 mm.

15. Fleischersatzprodukt, insbesondere als Bestandteil einer Fleischzusammensetzung nach einem der Ansprüche 1 bis 7 und/oder zur Verarbeitung in einem Verfahren gemäß eines der Ansprüche 8 bis 14, umfassend:
(A) 20 Gew.-% bis 40 Gew.-% texturiertes Weizenprotein,
(B) 2 Gew.-% bis 8 Gew.-% einer Mischung, bestehend aus:
(b1) 30 Gew.-% bis 80 Gew.-% Fleischpulver,
(b2) 10 Gew.-% bis 60 Gew.-% Rote Beete-Extrakt,
(b3) 1 Gew.-% bis 10 Gew.-% Karamell und/oder Paprika-Extrakt, und
(b4) 3 Gew.-% bis 12 Gew.-% Rosmarin-Extrakt,
wobei die Bestandteile (b1) bis (b4) zusammen 100 Gew.-%, bezogen auf Komponente (B) ergeben,
(D) 50 Gew.-% bis 75 Gew.-% Wasser, und
(E) optional, übliche Zusatzstoffe oder Hilfsstoffe sowie Gemischen davon, bevorzugt jedoch keine natürlichen Aromastoffe und/oder künstlichen Aromastoffe,
wobei die Mengenanteile der Komponenten (A), (B) und (D) zusammen 100 Gew.-% ergeben und der Anteil an der optionalen Komponente (E) zusätzlich addiert wird.
